# FASCICULE DE BREVET EUROPEEN

(11) **EP 1 248 379 B1**
(45) Date de publication et mention de la délivrance du brevet: **17.11.2004**
(21) Numéro de dépôt: 02100348.8
(22) Date de dépôt: 05.04.2002
(51) Int. Cl.: H04B 1/38, H04B 7/005

(54) **Procédé de contrôle d'un niveau d'absorption de signaux émis par un téléphone mobile**
Verfahren zur pegelsteuerung der aus einem mobiltelefon abgestrahlenden energie
Method for controlling the level of absorbed energy transmitted by a mobile phone

(30) Priorité: 06.04.2001 FR 0104751
(43) Date de publication de la demande: 09.10.2002
(73) Titulaire: SAGEM SA, 75015 Paris (FR)
(72) Inventeur: Charbonnier,M. Philippe, F-78600, LE MESNIL LE ROI (FR)
(74) Mandataire: Schmit, Christian Norbert Marie

(56) Documents cités:
- WO-A-95/03549
- US-A- 6 134 423

## Description

La présente invention a pour objet un procédé de contrôle d'un niveau d'absorption de signaux émis par un téléphone mobile. Le domaine de l'invention est celui de la téléphonie mobile. Cependant l'enseignement de l'invention peut être étendu à celui de tous les appareils radiants dont le fonctionnement est commandé par une infrastructure.

Un but de l'invention est de réduire la quantité de rayonnement absorbé par un utilisateur, généralement un être humain, d'un téléphone mobile.

Les réglementations de l'état de la technique tendent à limiter la dose de rayonnement électromagnétique qu'un téléphone mobile peut envoyer dans la tête de son utilisateur. On l'exprime avec la grandeur SAR (specific absorption ratio), qui représente une puissance absorbée par kg de matière organique moyennée sur une certaine durée. Par exemple la réglementation peut imposer un SAR inférieur à 2W/kg, moyenné sur une fenêtre glissante de 6 min.

Les constructeurs s'efforcent donc de maîtriser le diagramme de rayonnement du téléphone de façon que le rayonnement ait lieu surtout vers l'espace libre, et le moins possible vers l'oreille et la tête. C'est également bénéfique pour la propagation vers la station de base car la tête fait écran à ce qui est émis dans sa direction.

La limite de SAR est parfois difficile à respecter avec les mobiles actuels, et tendra à l'être encore plus à l'avenir. En effet, la puissance d'émission du mobile est généralement dictée par des normes et le mobile n'a pas le choix de la baisser : en GSM, l'infrastructure dicte en permanence au mobile par un canal de signalisation à quelle puissance il doit émettre ; ceci est nécessaire pour obtenir le meilleur compromis de qualité de transmission et de non-pollution des autres transmissions dans la cellule et hors cellule. Les transmissions de données tendront à être de débit croissant, ce qui implique une puissance croissante : un mobile GPRS multifenêtre émet avec autant de fois plus de puissance qu'il utilise de fenêtres. Un mobile voix plus données est susceptible d'avoir simultanément une communication de voix et une communication de données. Donc il peut émettre avec double puissance, sans que l'utilisateur ait même conscience de la communication de données. Des systèmes futurs pourront utiliser le principe de l'ODMA (opportunity driven multiple access) dans lequel tout mobile peut être utilisé comme relais par ses voisins (en plus de ses communications propres), sans que l'utilisateur le sache et puisse s'y opposer. Enfin la réglementation est susceptible d'évoluer vers une limite de SAR plus basse à l'avenir, ou différente selon les pays, ou vers la limitation d'un autre phénomène influant sur la santé et corrélé avec la puissance d'émission.

Dans l'état de la technique, il existe des téléphones mobiles qui évaluent le SAR reçu par la tête de son utilisateur, ou un équivalent, en faisant l'intégrale de la puissance qu'ils émettent dans le temps, et en en déduisant ce qui est absorbé par la tête grâce à une correspondance établie à la conception entre puissance émise et puissance captée par la tête, et en tenant compte des conditions d'utilisation de l'appareil. Par exemple, si l'appareil est en mode écoute amplifiée, ou si la puissance appliquée au haut-parleur est élevée, le haut-parleur est certainement à une certaine distance de l'oreille, donc l'absorption par la tête est moindre. Si cette évaluation dépasse un seuil, qui signifierait que la dose effectivement absorbée par la tête atteint la limite permise, alors le mobile entreprend des actions locales : avertir l'utilisateur, ralentir ou stopper la communication de données. Ceci est un peu brutal.

La demande de brevet US-A-6 134 423 décrit un procédé de contrôle d'un niveau d'absorption, par des tissus biologiques, de signaux émis par un téléphone mobile en liaison avec une station de base d'un réseau de téléphonie mobile, dans lequel:
- on mesure, à l'endroit du téléphone mobile, le niveau de signaux absorbés par un utilisateur du téléphone mobile,
- on émet un message de mesure du niveau de signaux absorbés, dutéléphone vers la station de base, pour avertir la station de base du niveau de signaux absorbés associé au téléphone mobile,
- on met en oeuvre, au niveau de la station de base, une solution de limitation du niveau de signaux absorbés.

L'invention implique l'infrastructure, les stations de base dans le cas de la téléphonie mobile, dans le processus de limitation du SAR. Un téléphone mobile selon l'invention effectue des mesures de SAR, et envoie ces mesures à la station de base à laquelle il est connecté. Cette station de base entreprend alors des actions de modification de paramètres de communication avec le téléphone mobile pour limiter le SAR.

L'invention a donc pour objet un procédé de contrôle d'un niveau d'absorption selon la revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles à la mise en oeuvre du procédé selon l'invention ;
- Figure 2 : une illustration du diagramme de rayonnement d'une antenne d'une station de base ;
- Figure 3: une illustration simple d'un dispositif permettant l'orientation du diagramme de rayonnement d'une antenne ;
- Figure 4 : une illustration d'étapes du procédé selon l'invention permettant au téléphone mobile de contrôler un niveau d'absorption de signaux émis ;
- Figure 5 : une illustration d'étapes du procédé selon l'invention permettant à une station de base de contrôler un niveau d'absorption de signaux émis par un téléphone mobile.

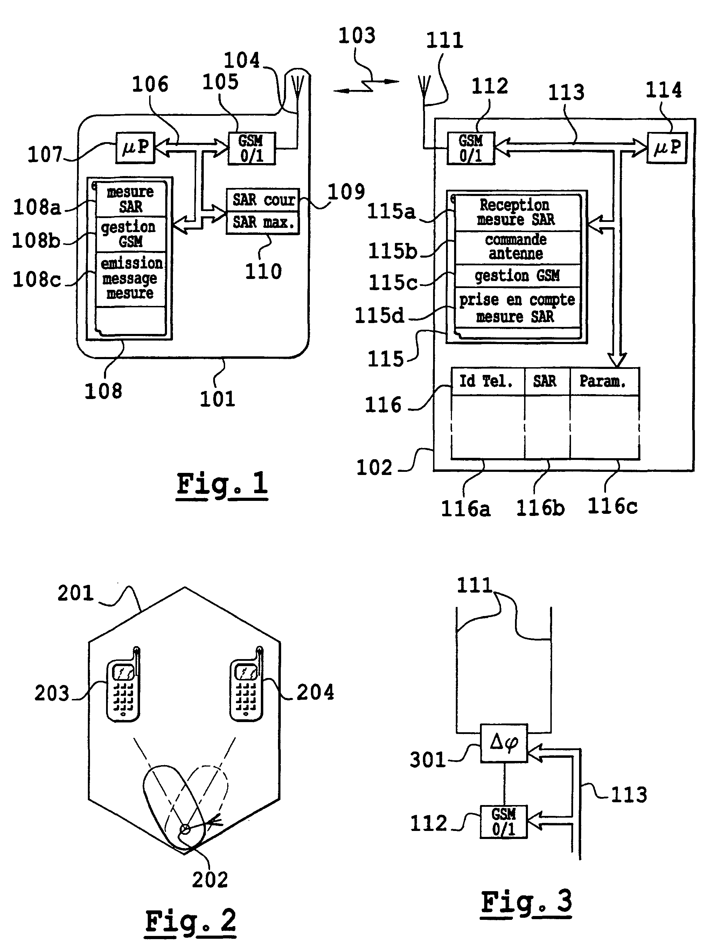

La figure 1 montre un téléphone 101 connecté à une station 102 de base via une liaison 103 hertzienne.

Le téléphone 101 comporte une antenne 104 connectée à des circuits 105 GSM. Pour les besoins de la description on utilise le terme GSM pour qualifier les circuits 105. Dans la pratique il pourrait s'agir de circuits permettant de mettre en oeuvre n'importe quelle norme utilisée dans la téléphonie mobile. Parmi ces normes on peut citer le GSM, le PCS, le DCS, l'UMTS, le GPRS, ainsi que d'autres, la liste n'est pas exhaustive. Le rôle des circuits 105 est de produire des signaux numériques à partir de signaux analogiques reçus via l'antenne 104. Le rôle des circuits 105 est aussi de produire des signaux analogiques à partir de signaux numériques reçus via un bus 106.

Un bus est un ensemble de fils et de pistes comportant ces éléments en nombre suffisant pour véhiculer des signaux de données, de commandes, d'adresses, d'interruptions, d'horloges et d'alimentation.

Le téléphone 101 comporte aussi un microprocesseur 107, connecté au bus 106. Le microprocesseur 107 effectue des actions, commandées par des codes instructions contenus dans une mémoire 108, elle aussi connectée au bus 106.

La mémoire 108 comporte plusieurs zones. Une première zone 108a comporte des codes instructions qui commandent le microprocesseur lorsque celui-ci effectue une mesure du SAR. Une deuxième zone 108b comporte des codes instructions qui commandent le microprocesseur 107 lorsque celui-ci effectue des actions liées à la gestion du protocole, ou de la norme, GSM. Une troisième zone 108c comporte des codes instructions qui commandent le microprocesseur 107 lorsque celui-ci émet un message de mesure du SAR.

Dans la description on fait exécuter des actions à un appareil, par exemple au téléphone 101. Il s'agit en fait du microprocesseur 107, commandé par des codes instructions d'une zone de la mémoire 108, qui met en oeuvre des éléments du téléphone 101 pour effectuer la dite action. Par exemple, si le téléphone 101 émet un message de mesure, cela signifie que le microprocesseur a composé ce message, en étant commandé par les codes instructions de la zone 108c, puis le microprocesseur 107 a transmis ce message aux circuits 105 GSM, via le bus 106. Les circuits 105 ont alors transformé ce message en signaux analogiques qui ont été diffusés via l'antenne 104. Pour la réception d'un message, le cheminement des données, de l'analogique vers le numérique, est inverse.

Le téléphone 101 comporte aussi deux registres 109 et 110. Ces registres sont, par exemple, des zones dans une mémoire. Le registre 109 permet d'enregistrer la valeur du SAR courant, alors que le registre 110 permet d'enregistrer la valeur maximale tolérable du SAR. La mémoire 110 enregistre donc un seuil qu'il ne faut pas dépasser pour le SAR.

La station de base 102 comporte une antenne 111. L'antenne 111 est connectée à des circuits 112 GSM de même fonction que les circuits 105. Les circuits 112 sont connectés à un bus 113. Les remarques faites pour la nature des circuits 105 sont également valables pour la nature des circuits 112.

La station 102 de base comporte aussi un microprocesseur 114 exécutant des actions, commandées par des codes instructions enregistrées dans une mémoire 115. La mémoire 115 comporte selon l'invention une zone 115a comportant des codes instructions commandant le microprocesseur 114, lorsque celui-ci effectue une action relative à la réception d'une mesure SAR. Une zone 115b comporte des codes instructions qui commandent le microprocesseur 114 lorsque celui-ci paramètre l'antenne 111. Une zone 115c comporte des codes instructions de gestion GSM, c'est-à-dire des codes instructions qui commandent le microprocesseur 114 lorsque celui-ci s'occupe de la gestion de la cellule à laquelle correspond la station de base 102.

On rappelle ici qu'un réseau GSM est un réseau dit cellulaire. Chaque cellule est commandée par une station de base. A cette station de base sont connectés un certain nombre de téléphones mobiles. Ces téléphones mobiles sont dits appartenant à la cellule.

La mémoire 115 comporte aussi une zone 115d comportant des codes instructions pour la prise en charge, par le microprocesseur 114, des mesures de SAR. Dans une variante de l'invention, la station 102 de base comporte aussi une mémoire, ou table, 116. La table 116 est connectée au bus 113 ainsi que les éléments 112, 114 et 115. La table 116 est divisée en lignes et en colonnes. Chaque ligne correspond à un enregistrement, chaque colonne correspond à une propriété de l'enregistrement. Une première colonne 116a correspond à un identifiant du téléphone mobile, par exemple son numéro de téléphone ou son numéro IMSI. Une deuxième colonne 116b correspond à la valeur courante du SAR. Une troisième colonne 116c comporte les paramètres standards utilisés pour les téléphones mobiles. Parmi ces paramètres standards on peut notamment trouver un identifiant du canal sur lequel la station de base 102 et le téléphone 101 communiquent, ainsi que la puissance à laquelle le téléphone 101 doit émettre.

La figure 2 illustre une cellule d'un réseau cellulaire. Une cellule 201 comporte une station 202 de base. La forme de la cellule 201 est déterminée par le diagramme de rayonnement d'une antenne de la station 202 de base. Ainsi une station 202 de base n'est pas forcément située au milieu de sa cellule. Cela est notamment le cas lorsque l'antenne de la station 202 a un diagramme de rayonnement ayant une direction privilégiée.

La figure 2 montre que la cellule 201 comporte deux téléphones 203 et 204. La figure 2 illustre aussi deux paramétrages possibles pour l'antenne de la station 202. Un premier paramétrage correspond à un lobe principal du diagramme de rayonnement en réception de l'antenne de la station 202 pointé dans la direction du téléphone 203. Celui-ci est donc favorisé car il ne doit pas émettre très fort pour être entendu par la station 202. Un deuxième paramétrage de l'antenne de la station 202 montre que le lobe principal du diagramme de rayonnement en réception de l'antenne peut être dirigé var le téléphone 204. Dans ce cas c'est ce téléphone 204 qui sera favorisé, en terme de SAR.

La figure 3 illustre une possibilité pour réaliser une antenne paramétrable, telle que l'antenne de la station de base 202. Considérons pour la description qu'il s'agit en fait de la station 102. La figure 3 montre alors que l'antenne 111 comporte en fait deux brins, chacun des brins étant relié à un circuit 301 déphaseur. Le circuit 301 est d'autre part connecté au circuit 112. Le circuit 301 est aussi connecté au bus 113. En agissant sur la différence de phase existant entre les signaux reçus via les deux brins de l'antenne 111, le microprocesseur 114, commandé par des codes instructions de la zone 115b, peut alors jouer sur la direction vers laquelle pointent les lobes du diagramme de rayonnement de l'antenne 111.

Un autre moyen d'obtenir une antenne dont on peut faire varier le diagramme de rayonnement, au moins son orientation, est de monter cette antenne sur un axe mobile à l'aide d'un moteur. Dans ce cas il suffit de faire pivoter physiquement l'antenne pour orienter son diagramme de rayonnement. On connaît aussi des moyens, notamment électroniques, de faire varier le diagramme en largeur et ou en direction.

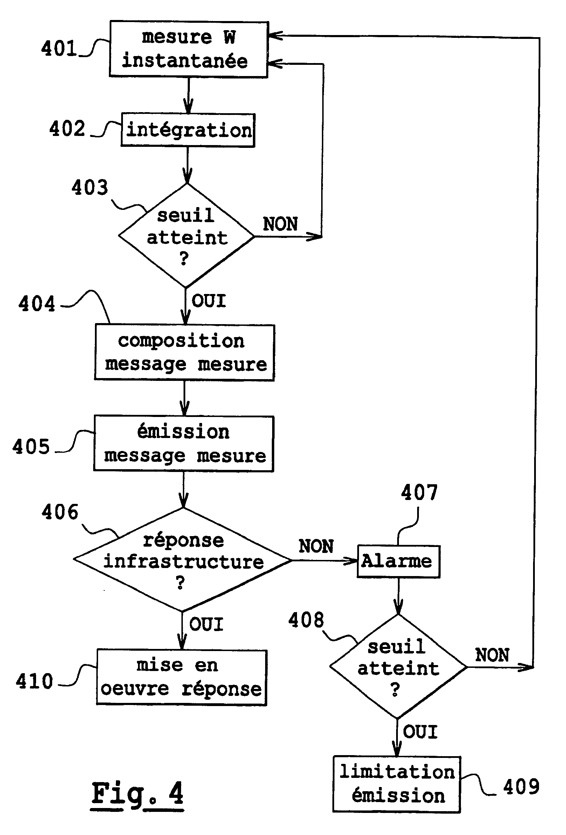

La figure 4 montre des étapes du procédé selon l'invention qui sont mises en oeuvre par le microprocesseur 107 du téléphone 101. Une première étape 401 préliminaire correspond à une mesure de la puissance instantanée émise par le téléphone 101, ainsi qu'une mesure du SAR. On peut effectuer ces mesures de la manière suivante.

Le téléphone mobile 101, étant de type GSM, est commandé en puissance, de 20milliwatts à 2 watts, par pas de 2 décibels. Une commande de puissance est reçue par le téléphone 101 avec une périodicité de 60 millisecondes. Cette commande est véhiculée par un canal dit SACCH, et est traitée par le microprocesseur 105, commandé par des codes instructions de la zone 108b. Il est donc possible, pour le téléphone 101, de savoir à quelle puissance il émet. Un canal SACCH est défini, par exemple, dans l'ouvrage *Réseaux GSM, 5*^{*ème*} *édition revue et augmentée,* de la Collection Hermès. Le canal SACCH est en particulier décrit aux pages 219 à 227, ainsi qu'aux pages 238 à 241.

Fort de la connaissance de la puissance à laquelle on émet, on passe à une étape 402 d'intégration de cette valeur. Dans la pratique une mesure de SAR correspond à l'intégrale des puissances instantanées émises par le téléphone 101 sur une période de six minutes. Pour obtenir la valeur du SAR, il suffit donc d'additionner les consignes que comportent les commandes de puissance reçues par le téléphone 101 pendant une durée de six minutes. On note qu'une précision suffisante est atteinte si l'on utilise une période de trois secondes pour réaliser l'intégration. Cela signifie que toutes les trois secondes, le microprocesseur 107 enregistre la consigne de la commande de puissance courante dans une mémoire d'intégrations dans laquelle peuvent être enregistrées 120 valeurs de consignes correspondant à une durée de six minutes divisée par intervalles de trois secondes. La somme de toutes les valeurs de consignes de cette mémoire donne donc la valeur du SAR. Cette mémoire est gérée comme une mémoire de type premier entré premier sorti dite FIFO (first in first out, ou premier entré premier sorti). Cela signifie que la première valeur enregistrée sera la première valeur à être remplacée lorsque la mémoire sera pleine. Les valeurs enregistrées dans la mémoire d'intégration ne sont pas forcément les valeurs des consignes, mais peuvent être des valeurs obtenues à partir de ces consignes, via une fonction linéaire ou non.

On passe alors à une étape 403 de détermination de l'atteinte ou non du seuil.

Dans l'étape 403 le microprocesseur compare le contenu de la mémoire 109 au contenu de la mémoire 110. On rappelle que le contenu de la mémoire 109 est obtenu en sommant l'ensemble des valeurs que comporte la mémoire dans laquelle sont enregistrées les 120 consignes précédemment décrites.

Si le contenu de la mémoire 109 est inférieur au contenu de la mémoire 110, on passe de l'étape 403 à l'étape 401. C'est-à-dire on continue de mesurer le SAR.

Si le contenu de la mémoire 109 est supérieur au contenu de la mémoire 110, on passe alors à une étape 404 de composition d'un message de mesure.

Dans l'étape 404 le microprocesseur 107, commandé par des codes instructions de la zone 108c, compose un message qui comporte, au moins, la valeur contenue dans la mémoire 109. Si le message est envoyé via un support de type SMS, il faut aussi que le message comporte un identifiant du téléphone ayant émis ce message pour que le récepteur de ce message sache à qui adresser sa réponse. Si le message de mesure est envoyé via un canal SACCH, ce canal étant affecté par la station de base à un téléphone mobile, le récepteur du message sait donc de quel téléphone mobile vient ce message. En effet le récepteur est la station de base.

On passe à une étape 405 d'émission du message de mesure. L'étape 405 a déjà été partiellement décrite lors de la description de l'étape 404. Une fois le message composé, le microprocesseur 107 le transmet, sous forme d'une suite de bits ou d'octets, aux circuits 105 qui se chargent alors de le transformer en signaux analogiques afin de le diffuser via l'antenne 104.

De l'étape 405 on passe à une étape 406 d'attente d'une réponse de l'infrastructure.

Dans une variante de l'invention on note que les étapes 401, 402, 404 et 405 pourraient s'enchaîner successivement. On passerait alors de l'étape 405 à l'étape 403. Cela signifie en fait que le message de mesure est émis à intervalle régulier, et non plus seulement lorsque le seuil maximal pour le SAR est atteint. Dans cette variante on passerait de l'étape 403 à l'étape 406 en cas de dépassement du seuil.

Ici on emploie le terme infrastructure pour désigner toute station de base à laquelle est susceptible de se connecter le téléphone 101. Dans notre exemple il s'agit de la station de base 102. Le téléphone 101 attend cette réponse, en cas de dépassement du seuil, pendant un temps prédéfini, par exemple une dizaine de secondes. Si dans ce laps de temps il reçoit une réponse on passe à l'étape 410 de mise en oeuvre de la réponse. La réponse de la station de base 102 est constituée de commandes standards de la norme GSM ou d'une autre selon la nature du téléphone 101. Il n'est donc pas utile de décrire la mise en oeuvre de ces réponses. Des exemples possibles pour ces réponses sont une commande pour émettre moins fort, c'est-à-dire à une puissance plus faible, ou une commande pour effectuer un handover intra-cellule, c'est-à-dire pour effectuer, dynamiquement, un changement des paramètres du canal sur lequel la station de base 102 et le téléphone mobile 101 communiquent.

Si la réponse de l'infrastructure ne parvient pas au téléphone 101 dans le temps prédéfini imparti, on passe à des étapes d'autogestion du dépassement du seuil par le téléphone 101. L'étape préliminaire est par exemple l'étape 407 d'alarme. Dans l'étape 407 le microprocesseur 107 provoque une alarme auditive et/ou visuelle. Il peut s'agir d'un son prédéfini diffusé par un haut-parleur du téléphone 101, d'un message affiché sur un écran du téléphone 101, ou du clignotement d'une diode que comporte le téléphone 101. Lorsque l'utilisateur prend conscience de cette alarme, libre à lui alors d'effectuer les actions qu'il juge nécessaires. Cette action consiste en général soit à continuer la conversation en éloignant le téléphone de sa tête, soit à l'interrompre. De l'étape 407 on passe à une étape 408 après un délai prédéfini imparti, par exemple encore une fois une dizaine de secondes. Dans l'étape 408 le microprocesseur 107 compare à nouveau le contenu de la mémoire 109 au contenu de la mémoire 110. Si la situation est redevenue normale, c'est-à-dire si le SAR est inférieur au seuil acceptable on repasse alors à l'étape 401, c'est-à-dire on interrompt le signal d'alarme et le téléphone 101 reprend un fonctionnement normal. Si le contenu de la mémoire 109 est toujours supérieur au contenu de la mémoire 110, on passe à une étape 409 de limitation de la puissance d'émission. Cette limitation peut être réalisée de plusieurs façons.

Une première façon de réaliser cette limitation est d'interrompre la communication entre le téléphone 101 et la station 102. Une autre manière est de limiter arbitrairement, et donc sans tenir compte des commandes de la station 102, la puissance à laquelle émet le téléphone mobile. Encore un autre moyen de limiter cette puissance est de diminuer le débit auquel le téléphone mobile 101 transmet ses informations.

En effet la puissance émise est proportionnelle aux quantités d'informations transmises. Si on émet moins d'informations la puissance émise est alors plus faible.

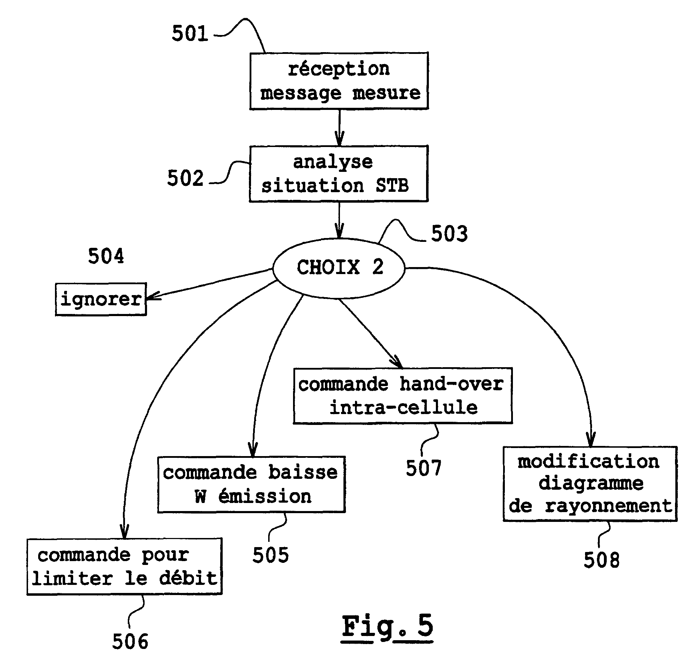

La figure 5 montre une étape 501 préliminaire de réception d'un message de mesure par la station 102 de base. Dans l'étape 501, le microprocesseur 114, commandé par les codes instructions de la zone 115a, analyse le message de mesure reçu afin de déterminer qui l'a émis ainsi que la valeur du SAR. La détermination de l'émetteur dépend du moyen qui a été utilisé pour transmettre le message. Si le message a été transmis via un canal SACCH, l'émetteur est identifié par le canal lui-même. En effet un canal SACCH est attribué, par la station de base 102, à un téléphone mobile unique qui lui est connecté. Si le message a été envoyé par un SMS, le message SMS comporte un champ identifiant l'émetteur.

La nature du paramètre SAR du message de mesure peut être diverse. Soit le paramètre SAR est une valeur de SAR, dans ce cas elle est codée sur un certain nombre de bits en fonction de la précision que l'on souhaite utiliser. Soit il s'agit uniquement d'un paramètre d'alerte. Dans ce cas un bit suffit. Par exemple ce bit vaut zéro si le SAR de l'appareil émettant le message est en dessous d'un seuil, le bit vaut un si le SAR du même appareil est supérieur au seuil.

Une fois en possession de ces informations, le microprocesseur 114 met à jour la table 116. Pour ce faire, le microprocesseur 114 recherche dans la colonne 116a l'identifiant de l'émetteur. Une fois qu'il l'a trouvé, il met à jour la colonne 116b correspondant à l'identifiant. On passe alors à une étape 502 d'analyse de la situation de la station de base.

L'étape 502 est facultative. En effet le microprocesseur 114, c'est-à-dire la station de base 102, peut très bien décider d'une action consécutive à la réception du message de mesure sans tenir compte de l'ensemble des téléphones mobiles qui sont connectés à la station de base 102. Cependant si analyse il y a, le microprocesseur 114 parcourt la table 116 à la recherche des identifiants de téléphone mobile dont le niveau de SAR est le plus favorable. Par favorable il faut comprendre faible, ou dont le bit d'alerte est à zéro. En effet pour remédier au problème d'un dépassement de seuil de SAR par un téléphone mobile, la station de base 102 va éventuellement devoir défavoriser d'autres téléphones mobiles. Les téléphones mobiles défavorisés seront alors sélectionnés parmi ceux dont le niveau de SAR est le plus faible.

On passe à une étape 503 de choix, ou de sélection d'une action de réponse au message de mesure à la station de base 102.

Une première solution 504 est d'ignorer le message de SAR. Dans l'étape 504 la station de base 102 ne tient pas compte des messages de mesure qu'elle reçoit.

Une deuxième solution 505 est d'émettre une commande, depuis la station de base 502 vers le téléphone 101, pour limiter la puissance d'émission du téléphone 101. Cela aura pour effet de ramener le niveau de SAR du téléphone 101 à un niveau plus acceptable. Une telle commande est prévue par la norme GSM et émise par un canal SACCH attribué au contrôle des communications entre la station de base 102 et le téléphone 101.

Une solution 506 consiste à émettre une commande pour limiter le débit. Comme pour la commande 505, cette commande est prévue par la norme. Dans le cas présent ces commandes sont donc simplement employées à d'autres fins que celles qui étaient initialement prévues. Cette fin est de limiter le SAR des téléphones connectés à la station 102 de base. Le fait de limiter le débit va étaler dans le temps les moments où le téléphone va émettre. La puissance moyenne émise par le téléphone sera donc inférieure, ce qui va améliorer le SAR.

Une solution 507 consiste à commander un handover intra-cellule. Un tel handover est défini dans l'ouvrage précédemment cité à la page 290 et suivantes. Globalement un handover est un mécanisme grâce auquel le téléphone mobile peut transférer sa connexion, avec la station de base, d'un canal radio vers un autre. Dans le GSM un canal radio est défini par une fréquence, des dates à laquelle le téléphone mobile peut utiliser cette fréquence, et une loi de saut de fréquence. Le choix du nouveau canal qui sera utilisé se fait en fonction de l'environnement du téléphone 101. En effet sur son canal actuel il est possible que le téléphone 101 doive émettre fort car la fenêtre qu'il utilise est fortement bruité. Le fait de lui attribuer un nouveau canal, donc une nouvelle fenêtre d'émission, qui est moins brouillé par l'environnement permettra donc au téléphone mobile 101 d'émettre moins fort.

Pour la solution 507 il est possible qu'aucun nouveau canal ne soit libre au niveau de la station de base. Dans ce cas la station 102 commande deux handover afin d'échanger les canaux utilisés par le téléphone 101 et par un autre téléphone. Cet autre téléphone est choisi, via la table 116, en fonction de sa valeur de SAR. Cet autre téléphone a de préférence une valeur de SAR faible.

Dans une variante de l'invention, il est aussi possible de prévoir d'effectuer des handover inter-cellule. Les raisons de ce handover seraient alors les mêmes que pour la solution 507. Un tel handover inter-cellule est défini aux pages précédemment citées.

Une solution 508 consiste à modifier le diagramme de rayonnement d'une antenne de la station 102 de base. En effet, il est de plus en plus fréquent de voir des stations de base avec des antennes directives. Le lobe principal du diagramme de rayonnement d'une telle antenne a alors une direction privilégiée. Si cette direction privilégiée n'est pas pointée dans la direction du téléphone 101, alors celui-ci va devoir émettre plus fort, pour être correctement entendu par la station de base 102, qu'un autre téléphone mobile qui est dans la direction privilégiée du lobe principal de l'antenne. Lorsque la station 102 de base reçoit un message de mesure de la part du téléphone 101, si le téléphone 101 n'est pas dans la direction du lobe principal de l'antenne, la station de base 102 peut alors décider d'orienter son lobe principal en direction du téléphone 101. Ce faisant elle permet au téléphone 101 d'émettre moins fort. Cependant ce faisant elle défavorise aussi les téléphones qui étaient précédemment dans la direction du lobe principal de l'antenne. Dans ce dernier cas, dans le signal de mesure de SAR que transmet le téléphone mobile peut être incorporée une information de localisation de ce téléphone mobile, pour que sa direction puisse être favorisée.

De préférence, dans le cas où l'alarme a été mise en service, le message de mesure de SAR comporte un code instruction formant requête en révision de la puissance d'émission du téléphone mobile. En plus de l'information de SAR, la station de base peut donc prendre en compte cette requête expresse.

Par ailleurs, il est possible de soumettre cette révision de puissance d'émission à certains téléphones mobiles seulement, ceux dont une classe (éventuellement transmise dans le message de SAR) indique un traitement privilégié (pompier, police, client ayant choisi une option à cet effet).

## Revendications

1. Procédé de contrôle d'un niveau d'absorption, par des tissus biologiques, de signaux émis, par un téléphone (101) mobile en liaison avec une station (102) de base d'un réseau de téléphonie mobile, cette station de base émettant des commandes de puissance, procédé dans lequel :
- on élabore (401-402), à l'endroit du téléphone mobile, une information de niveau de signaux absorbé par un utilisateur du téléphone mobile,
**caractérisé en ce que**:
- on émet (405) un message de mesure du niveau de signaux absorbés correspondant à cette élaboration, du téléphone vers la station de base,
- le téléphone mobile réduit arbitrairement sa puissance d'émission après l'écoulement d'un délai courant à partir de l'émission du message de mesure, et le téléphone est capable de réduire sa puissance d'émission tout en maintenant la communication sans tenir compte des commandes de puissance de la station de base.

2. Procédé selon la revendication 1, **caractérisé en ce que** le message de mesure du niveau de signaux absorbés est émis via un canal de contrôle.

3. Procédé selon l'une des revendication 1 ou 2, **caractérisé en ce que** le message de mesure du niveau de signaux absorbés est émis via un message court.

4. Procédé selon l'une des revendications 1 à 3, **caractérisé en ce que** le message de mesure du niveau de signaux absorbés est émis à l'approche (403) d'un seuil maximal prédéfini du niveau de signaux absorbés.

5. Procédé selon l'une des revendications 1 à 4, **caractérisé en ce que** le message de mesure du niveau de signaux absorbés est émis à intervalle régulier.

6. Procédé selon l'une des revendications 1 à 5, **caractérisé en ce que** le message de mesure de signaux absorbés comporte (404) une information sur le niveau de signaux absorbés.

7. Procédé selon l'une des revendications 1 à 5, **caractérisé en ce que** le message de mesure du niveau de signaux absorbés comporte (404) une information sur le dépassement d'un seuil maximal prédéfini du niveau de signaux absorbés.

8. Procédé selon l'une des revendications 1 à 7, **caractérisé en ce que**:
- la station de base analyse (502-503), la situation d'autres téléphones mobiles que le premier, connectés à la station de base pour mettre en oeuvre une solution de limitation du niveau de signaux absorbés la plus adaptée à la cellule.

9. Procédé selon la revendication 8, **caractérisé en ce que**:
- on émet (505), depuis la station de base et à destination du premier téléphone mobile, un message de commande pour diminuer la puissance d'émission du premier téléphone mobile.

10. Procédé selon l'une des revendications 8 à 9, **caractérisé en ce que**:
- on émet (506), depuis la station de base et à destination du premier téléphone mobile, un message de commande pour diminuer le débit des données émises par le premier téléphone mobile.

11. Procédé selon l'une des revendications 8 à 10, **caractérisé en ce que**:
- on émet (507), depuis la station de base et à destination du premier téléphone mobile, un message de commande pour provoquer un changement d'un premier canal de communication actuellement utilisé par le premier téléphone mobile, vers un deuxième canal de communication plus favorable en terme de niveau de signaux absorbés.

12. Procédé selon la revendication 11, **caractérisé en ce que** le deuxième canal de communication est utilisé par un deuxième téléphone mobile, alors:
- on émet (507), depuis la station de base et à destination du deuxième téléphone mobile, un message de commande pour provoquer un changement du deuxième canal de communication, vers un troisième canal de communication.

13. Procédé selon l'une des revendications 8 à 12, **caractérisé en ce que**:
- on modifie (508), au niveau de la station de base, un diagramme de rayonnement en réception d'une antenne de la station de base pour favoriser le téléphone mobile,
- on émet, depuis la station de base vers le premier téléphone mobile, un message de commande pour diminuer la puissance d'émission du premier téléphone mobile,
- on émet, depuis la station de base vers des téléphones mobiles connectés à la station de base et autres que le premier téléphone mobile, des messages de commande pour tenir compte de la modification du diagramme de rayonnement.

## Patentansprüche

1. Verfahren zur Steuerung des Absorptionspegels durch biologische Gewebe von Signalen, welche von einem Mobiltelefon (101) gesendet werden, das mit einer Basisstation (102) eines Mobiltelefonnetzes verbunden ist, wobei diese Basisstation Leistungsbefehle sendet, bei dem
- am Ort des Mobiltelefons eine Information über den Pegel der von einem Benutzer des Mobiltelefons absorbierten Signale ermittelt wird (401-402),
**dadurch gekennzeichnet, dass**
- eine dieser Ermittlung entsprechende Nachricht über die Messung des Pegels von absorbierten Signalen vom Telefon zur Basisstation gesendet wird (405),
- das Mobiltelefon seine Sendeleistung willkürlich verringert nach Ablauf eines Zeitintervalls, welches mit der Sendung der Messnachricht beginnt, und das Telefon in der Lage ist, seine Sendeleistung zu verringern und dabei die Kommunikation aufrechtzuerhalten, ohne die Leistungsbefehle der Basisstation zu berücksichtigen.

2. Verfahren nach Anspruch 1, **dadurch gekennzeichnet, dass** die Nachricht über die Messung des Pegels der absorbierten Signale über einen Kontrollkanal gesendet wird.

3. Verfahren nach einem der Ansprüche 1 oder 2, **dadurch gekennzeichnet, dass** die Nachricht über die Messung des Pegels der absorbierten Signale über eine Kurznachricht gesendet wird.

4. Verfahren nach einem der Ansprüche 1 bis 3, **dadurch gekennzeichnet, dass** die Nachricht über die Messung des Pegels der absorbierten Signale bei Annäherung an (403) eine vorgegebene maximale Schwelle des Pegels der absorbierten Signale gesendet wird.

5. Verfahren nach einem der Ansprüche 1 bis 4, **dadurch gekennzeichnet, dass** die Nachricht über die Messung des Pegels der absorbierten Signale in regelmäßigem Abstand gesendet wird.

6. Verfahren nach einem der Ansprüche 1 bis 5, **dadurch gekennzeichnet, dass** die Nachricht über die Messung des Pegels der absorbierten Signale eine Information über den Pegel der absorbierten Signale enthält (404).

7. Verfahren nach einem der Ansprüche 1 bis 5, **dadurch gekennzeichnet, dass** die Nachricht über die Messung des Pegels der absorbierten Signale eine Information über das Überschreiten einer vorgegebenen maximalen Schwelle des Pegels der absorbierten Signale enthält (404).

8. Verfahren nach einem der Ansprüche 1 bis 7, **dadurch gekennzeichnet, dass**
- die Basisstation den Zustand anderer Mobiltelefone als des ersten auswertet (502-503), welche mit der Basisstation verbunden sind, um eine Lösung zur Begrenzung des Pegels der absorbierten Signale umzusetzen, welche für die Zelle am besten geeignet ist.

9. Verfahren nach Anspruch 8, **dadurch gekennzeichnet, dass**
- von der Basisstation zum ersten Mobiltelefon eine Befehlsnachricht gesendet wird (505), um die Sendeleistung des ersten Mobiltelefons zu reduzieren.

10. Verfahren nach einem der Ansprüche 8 bis 9, **dadurch gekennzeichnet, dass**
- von der Basisstation zum ersten Mobiltelefon eine Befehlsnachricht gesendet wird (506), um die Rate der vom ersten Mobiltelefon gesendeten Daten zu reduzieren.

11. Verfahren nach einem der Ansprüche 8 bis 10, **dadurch gekennzeichnet, dass**
- von der Basisstation zum ersten Mobiltelefon eine Befehlsnachricht gesendet wird (507), um einen Wechsel von einem ersten, aktuell vom ersten Mobiltelefon benutzten Kommunikationskanal zu einem zweiten Kommunikationskanal zu bewirken, welcher hinsichtlich des Pegels der absorbierten Signale günstiger ist.

12. Verfahren nach Anspruch 11, **dadurch gekennzeichnet, dass**, wenn der zweite Kommunikationskanal von einem zweiten Mobiltelefon verwendet wird, dann:
- von der Basisstation zum zweiten Mobiltelefon eine Befehlsnachricht gesendet wird (507), um einen Wechsel vom zweiten Kommunikationskanal zu einem dritten Kommunikationskanal zu bewirken.

13. Verfahren nach einem der Ansprüche 8 bis 12, **dadurch gekennzeichnet, dass**
- an der Basisstation ein Empfangsstrahlungsdiagramm einer Antenne der Basisstation geändert wird (508), um das Mobiltelefon zu bevorteilen;
- von der Basisstation zum ersten Mobiltelefon eine Befehlsnachricht gesendet wird, um die Sendeleistung des ersten Mobiltelefons zu verringern;
- von der Basisstation zu anderen als dem ersten Mobiltelefon, mit der Basisstation verbundenen Mobiltelefonen Befehlsnachrichten gesendet werden, um der Änderung des Strahlungsdiagramms Rechnung zu tragen.

## Claims

1. Method for controlling a level of absorption by biological tissues of signals transmitted by a mobile telephone (101) in connection with a base station (102) of a mobile telephone network, this base station transmitting power commands, in which method:
- information on the level of signals absorbed by a user of the mobile telephone is prepared (401-402) at the location of the mobile telephone,
***characterised in that***
- a message giving the measurement of the level of signals absorbed corresponding to this preparation is transmitted (405) from the telephone to the base station;
- the mobile telephone arbitrarily reduces its transmission power after a period of time has elapsed running from the transmission of the message giving the measurement, and the telephone is capable of reducing its transmission power while maintaining communication without taking account of the power commands from the base station.

2. Method according to claim 1, ***characterised in that*** the message giving the measurement of the level of signals absorbed is transmitted via a control channel.

3. Method according to one of claims 1 or 2, ***characterised in that*** the message giving the measurement of the level of signals absorbed is transmitted via a short message.

4. Method according to one of claims 1 to 3, ***characterised in that*** the message giving the measurement of the level of signals absorbed is transmitted on approaching (403) a predefined maximum threshold for the level of signals absorbed.

5. Method according to one of claims 1 to 4, ***characterised in that*** the message giving the measurement of the level of signals absorbed is transmitted at regular intervals.

6. Method according to one of claims 1 to 5, ***characterised in that*** the message giving the measurement of signals absorbed comprises (404) information on the level of signals absorbed.

7. Method according to one of claims 1 to 5, ***characterised in that*** the message giving the measurement of the level of signals absorbed comprises (404) information on the overshooting of a predefined maximum threshold for the level of signals absorbed.

8. Method according to one of claims 1 to 7, ***characterised in that***:
- the base station analyses (502-503) the situation of mobile telephones other than the first connected to the base station in order to implement a solution for limiting the level of signals absorbed which is best suited to the cell.

9. Method according to claim 8, ***characterised in that***:
- a command message to reduce the transmission power of the first mobile telephone is transmitted (505) from the base station to the first mobile telephone.

10. Method according to one of claims 8 to 9, ***characterised in that***:
- a command message to reduce the throughput of data transmitted by the first mobile telephone is transmitted (506) from the base station to the first mobile telephone.

11. Method according to one of claims 8 to 10, ***characterised in that***:
- a command message to cause a change from a first communication channel currently being used by the first mobile telephone to a second communication channel which is more favourable in terms of level of signals absorbed is transmitted (507) from the base station to the first mobile telephone.

12. Method according to claim 11, ***characterised in that*** the second communication channel is used by a second mobile telephone when:
- a command message to cause a change from the second communication channel to a third communication channel is transmitted (507) from the base station to the second mobile telephone.

13. Method according to one of claims 8 to 12, ***characterised in that***:
- a reception radiation diagram of an antenna of the base station is modified (508) at the base station in order to favour the mobile telephone;
- a command message to reduce the transmission power of the first mobile telephone is transmitted from the base station to the first mobile telephone;
- command messages to take account of the modification of the radiation diagram are transmitted from the base station to mobile telephones connected to the base station other than the first mobile telephone.
